# EUROPÄISCHE PATENTSCHRIFT

(11) **EP 1 844 526 B1**
(45) Veröffentlichungstag und Bekanntmachung des Hinweises auf die Patenterteilung: **15.06.2011**
(21) Anmeldenummer: 06706382.6
(22) Anmeldetag: 24.01.2006
(51) Int. Cl.: H01R 4/58, H05B 3/14

(54) **ANORDNUNG ZUM ERZEUGEN EINES ELEKTRISCHEN STROMFLUSSES DURCH KOHLENSTOFFFASERN**
ARRANGEMENT FOR GENERATING AN ELECTRICAL FLOW OF CURRENT THROUGH CARBON FIBERS
DISPOSITIF POUR PRODUIRE UN FLUX DE COURANT ELECTRIQUE A TRAVERS DES FIBRES DE CARBONE

(30) Priorität: 24.01.2005 DE 102005003371
(43) Veröffentlichungstag der Anmeldung: 17.10.2007
(73) Patentinhaber: Kiersch Composite GmbH, 22880 Wedel (DE)
(72) Erfinder: KIERSCH, Walter, 22880 Wedel (DE)
(74) Vertreter: Harlfinger, Jan Philipp
(86) Internationale Anmeldenummer: PCT/EP2006/000596
(87) Internationale Veröffentlichungsnummer: WO 2006/077157

(56) Entgegenhaltungen:
- WO-A-98/09478
- DE-A1- 3 813 150
- US-A- 4 098 449
- US-A1- 2001 021 543
- PATENT ABSTRACTS OF JAPAN Bd. 013, Nr. 468 (E-834), 23. Oktober 1989 (1989-10-23) & JP 01 181553 A (MITSUBISHI ELECTRIC CORP), 19. Juli 1989 (1989-07-19)

## Beschreibung

Die Erfindung betrifft eine Anordnung zum Erzeugen eines elektrischen Stromflusses durch Kohlenstofffasern gemäß dem Oberbegriff des Anspruchs 1.

Bei unter Verwendung von Kohlenstofffasern hergestellten Bauteilen ist es häufig wünschenswert, dass ein elektrischer Strom durch die Fasern fließt. Der elektrische Strom kann dazu dienen, die Kohlenstofffasern aufzuheizen.

An den Übergangsflächen von elektrisch leitfähigen Materialien zu Kohlenstofffasern ist der elektrische Widerstand pro Flächenheit hoch. Beim Erzeugen eines elektrischen Stroms durch Kohlenstofffasern besteht deswegen eine Schwierigkeit darin, den elektrischen Übergang zwischen den stromzuführenden elektrischen Leitern und den Kohlenstofffasern herzustellen.

Aus GB-A-2 116 076 ist es bekannt, frei aus der umgebenden elektrisch isolierenden Masse herausragende Enden der Kohlenstofffasern mit einem elektrisch leitfähigen Material in Verbindung zu bringen. Auf diese Weise gelangt der Strom nahezu ausschließlich über die Umfangsfläche der Kohlenstofffaser in die Kohlenstofffaser. Eine eventuell zusätzlich bestehende Verbindung zwischen elektrisch leitfähigem Material und den Endflächen der Kohlenstofffasern trägt wegen des geringen Flächenanteils und des hohen Übergangswiderstands nahezu nichts zur Stromübertragung bei. Auf diese Weise werden überwiegend die außenliegenden Schichten der Kohlenstofffaser für den Stromfluss genutzt. Diese Lösung setzt zudem voraus, dass das Bauteil unter Abweichung vom normalen Produktionsablauf so hergestellt wird, dass an den Stellen, an denen später eine elektrische Verbindung bestehen soll, die Enden der Kohlenstofffasern frei herausragen. Insbesondere ist es nicht möglich, elektrische Verbindungen an herkömmlich hergestellten Kohlenstofffaser-Bauteilen nachträglich anzubringen.

Das Problem, dass der Strom zumindest im Wesentlichen über die Umfangsfläche in die Kohlenstofffasern eingeführt wird, tritt auch beim Heizelement der WO 98/09478 auf. Auch bei dem mit Kohlenstofffasern verstärkten Formstück der DE 38 13 150 A1 erfolgt die Kontaktierung der Faserenden wenigstens teilweise am Umfang der Fasern, da das aufgebrachte Lot die Faserenden vollständig einschließt.

Der Erfindung liegt die Aufgabe zu Grunde, eine Anordnung zum Erzeugen eines Stromflusses gemäß dem Oberbegriff des Anspruchs 1 vorzustellen, bei der der elektrische Widerstand am Übergang zu den Kohlenstofffasern klein ist und die unter geringem Aufwand hergestellt werden kann.

Die erfinderische Lösung liegt in den Merkmalen des Anspruchs 1, vorzugsweise in den Merkmalen der Unteransprüche.

Kohlenstofffasern haben eine Längserstreckung, die wesentlich größer ist als ihr Querschnitt. Im Rahmen der Erfindung wird von einem Stromfluss durch eine Kohlenstofffaser gesprochen, wenn der Strom entlang der Längserstreckung der Kohlenstofffaser fließt.

Die Kohlenstofffasern sind in eine elektrisch isolierende Masse eingebettet. Eingebettet heißt, dass wesentliche Teile der Oberfläche von elektrisch isolierenden Masse umgeben sind, dies muss jedoch nicht für die vollständige Oberfläche gelten. Insbesondere Endflächen der Kohlenstofffasern, also solche Flächen, die entstehen, wenn eine Kohlenstofffaser in Längsrichtung in zwei Teile durchtrennt wird, können von der Einbettung in die elektrisch isolierende Masse ausgenommen sein.

Elektrische Isolierung muss im Rahmen der Erfindung keine absolute Isolierung sein. Es reicht aus, wenn der spezifische elektrische Widerstand der elektrisch isolierenden Masse erheblich höher liegt als der spezifische elektrische Widerstand der Kohlenstofffasern.

Erfingdungsgemäß sind die Kohlenstofffasern über ihre Endflächen mit den elektrischen Leitern elektrisch leitend verbunden und die Endflächen sind größer als die Querschnittsflächen der jeweiligen Kohlenstofffasern. Die Querschnittsfläche ist die Fläche, die entsteht, wenn eine Kohlenstofffaser unter einem 90°-Winkel relativ zu ihrer Längsrichtung durchtrennt wird. Die Endfläche ist dann größer als die Querschnittsfläche, wenn eine Kohlenstofffaser unter einem anderen Winkel, also schräg zur Längsrichtung der Kohlenstofffaser durchtrennt wird.

Die Erfindung baut auf der Erkenntnis auf, dass eine brauchbare Leitfähigkeit zwischen kohlenstofffasern und elektrisch leitfähigem Material trotz des großen elektrischen Widerstands pro Flächeneinheit erreicht werden kann, indem die Übergangsfläche, auf der die Kohlenstofffasern mit dem elektrisch leitfähigen Material in Verbindung steht, vergrößert wird. Die Erfindung hat erkannt, dass eine solche Vergrößerung der Übergangsfläche mit geringem Aufwand erreicht werden kann, indem im Vergleich zum Querschnitt größere Endflächen gewählt werden.

Kontaktierung einer schrägen Endfläche ist einerseits in der Halbleitertechnologie aus der US 2001/0021543 A1 und andererseits für die Verbindung von Kupfer und Aluminium aus der US 4,098,449 bekannt. Die Kontaktierung von Kohlenstofffasern ist dort nicht angesprochen. Für mechanisch starke Verbindungen sind schräge Endflächen aus JP 01181553 A bekannt. Es handelt sich weder um die Kontaktierung von Kohlenstofffasern, noch ist die Frage der Leitfähigkeit angesprochen.

Vorzugsweise ist der Flächeninhalt der Endflächen mindestens eineinhalb mal so groß, weiter vorzugsweise mindestens zweimal, weiter vorzugsweise mindestens dreimal so groß wie der Flächeninhalt der Querschnittsflächen. Im Rahmen der Erfindung müssen die Endflächen nicht zwingend ebene Flächen sein. Sind sie ebene Flächen, so schließen sie mit der Längsrichtung der Kohlenstofffasern vorzugsweise einen Winkel von weniger als 45°, weiter vorzugsweise weniger als 30°, weiter vorzugsweise weniger als 15° ein.

Vom Umfang der Erfindung erfasst ist es, wenn die Kohlenstofffasern neben ihren Endflächen auch über Anteile der Umfangsfläche elektrisch verbunden sind, in einer vorteilhaften Ausführungsform besteht die elektrische Verbindung aber ausschließlich über die Endflächen. Die Umfangsflächen können vollständig mit elektrisch isolierender Masse umgeben sein.

Vorzugsweise sind die Kohlenstofffasern im wesentlichen parallel zueinander ausgerichtet. Die Endflächen haben dann ebenfalls eine im wesentlichen gleiche Ausrichtung und die Herstellung der elektrischen Verbindung wird erleichtert.

Die elektrisch isolierende Masse kann ein Kunstharz, beispielsweise ein Epoxydharz sein. Solche Kunstharze bilden mit eingebetteten Kohlefasern sehr feste Strukturen.

Die Kohlenstofffasern können mit der elektrisch isolierenden Masse einen festen Körper bilden, wobei die Endflächen der Kohlenstofffasern in einer Schnittfläche des festen Körpers liegen. Die Anordnung der Endflächen in einer Schnittfläche macht es besonders einfach, die elektrische Verbindung herzustellen. Die Schnittfläche kann das Ergebnis eines Schnitts sein, mittels dessen ein Teils des festen Körper abgetrennt wurde, die Schnittfläche kann aber auch durch andere Arten der Bearbeitung, wie etwa Fräsen oder Schleifen, erzeugt sein.

In einer vorteilhaften Ausführungsform stellt ein Zwischenmaterial die Verbindung zwischen den Endflächen und den elektrischen Leitern her. Üblicherweise verwendete elektrische Leiter bestehen aus Metall, etwa aus Kupfer. Es erweist sich als schwierig, einen elektrischen Kontakt unmittelbar zwischen solchen üblichen elektrischen Leitern und den Kohlenstofffasern herzustellen. Vorzugsweise kommt deswegen ein Zwischenmaterial zum Einsatz. Das Zwischenmaterial steht mit dem elektrischen Leiter auf der einen Seite und den Endflächen auf der anderen Seite in elektrische leitender Verbindung, so dass insgesamt eine elektrische Verbindung zwischen elektrischem Leiter und Endflächen entsteht.

Das Zwischenmaterial kann ein Kunstharz sein, in das eine Vielzahl von elektrisch leitfähigen Partikeln eingeschlossen sind. Ein solches Kunstharz hat den Vorteil, dass es sich gut mit der die Kohlenstofffasern umgebenden isolierenden Masse verbindet, so dass die Verarbeitung einfach ist. Es ist eine bekannte Maßnahme, das normalerweise isolierende Kunstharz durch den Einschluss von leitfähigen Bestandteilen, wie etwa Silberpartikeln leitfähig zu machen.

In einer anderen Ausführungsform kann das Zwischenmaterial ein metallisches Material sein. Vorzugsweise liegt das metallische Material in einem verformbaren Zustand vor, beispielsweise kann es die Form einer Folie haben. Zum Herstellen der Verbindung zur kohlenstofffaser kann das metallische Material auf die Schnittfläche aufgepresst werden. Möglich ist es auch, das metallische Material für den Prozess der Verbindungsherstellung in einen verformbaren Zustand zu bringen, beispielsweise indem man das metallische Material durch Zufuhr von Wärme schmelzen lässt.

In vielen Fällen ist es erwünscht, dass das unter Verwendung von Kohlenstofffasern hergestellte Bauteil elektrisch beheizt werden kann. In einer vorteilhaften Ausführungsform ist die Stromquelle der Anordnung deswegen so dimensioniert, dass die Kohlenstofffasern sich um 20°K, vorzugsweise um 40°K gegenüber der Umgebungstemperatur erwärmen. Durch ihre Einbettung in die elektrisch isolierende Masse geben die Kohlenstofffasern einen großen Teil der erzeugten Wärme an die elektrisch isolierende Masse ab. Die angegebenen Temperaturdifferenzen sind so zu verstehen, dass sie sich trotz Wärmeabgabe einstellen, dass also die umgebende elektrisch isolierende Masse sich zusammen mit den Kohlenstofffasern um den gleichen Betrag erwärmt.

Ebenso ist es häufig erwünscht, Änderungen des Stromflusses festzustellen. Wenn eine der stromdurchflossenen Kohlenstofffasern bricht, ändert sich ihr elektrischer Widerstand. Aus der daraus resultierenden Änderung des Stromflusses kann auf Schäden geschlossen werden. Die erfindungsgemäße Anordnung kann zu diesem Zweck eine Messeinrichtung umfassen, die Änderungen des elektrischen Widerstandes der Kohlenstofffasern erfasst.

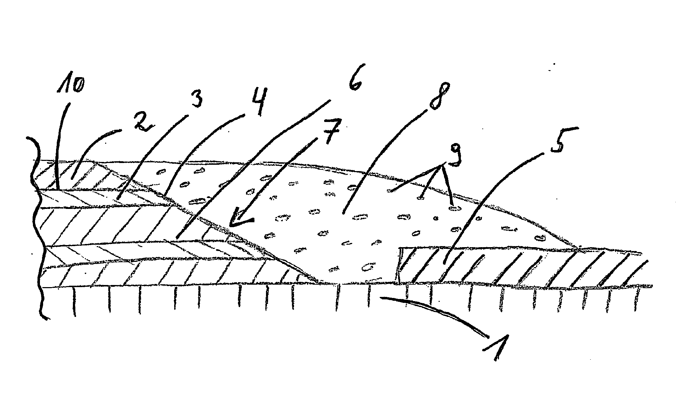

Die Erfindung wird im folgenden unter Bezugnahme auf die beigefügte Zeichnung anhand einer vorteilhaften Ausführungsform beispielhaft beschrieben. Die Fig. zeigt einen Schnitt durch eine erfindungsgemäße Anordnung.

In der Fig. sind auf einem Träger 1 ein fester Körper 2 und ein elektrischer Leiter 5 angeordnet. Der feste Körper 2 besteht aus einem eine elektrisch isolierende Masse bildenden Kunstharz 6, in das parallel zueinander ausgerichtete Kohlenstofffasern 3 eingebettet sind. Der feste Körper ist schräg zur Längserstreckung der kohlenstofffasern 3 durchtrennt, abgeschnitten oder auf andere Weise bearbeitet, so dass er eine Schnittfläche 7 aufweist, in der die Endflächen 4 der ebenfalls durchtrennten Kohlenstofffasern 3 angeordnet sind. Die Umfangsflächen der Kohlenstofffasern 3 sind vollständig mit elektrisch isolierendem Kunstharz 6 umgeben. Da die Kohlenstofffasern 3 schräg zu ihrer Längserstreckung durchtrennt sind, sind die Endflächen 4 größer als die Querschnittsflächen der Kohlenstofffasern 3.

Angrenzend an die Schnittfläche 7 ist ein Zwischenmaterial 8 aufgebracht. Neben der Schnittfläche 7 ist das Zwischenmaterial 8 weiterhin mit einem Ende des elektrischen Leiters 5 in verbunden. Mit seinem anderen Ende steht der elektrische Leiter 5 mit einer nicht dargestellten Stromquelle in Verbindung.

Das Zwischenmaterial 8 kann ein Kunstharz sein, das durch den Einschluss von elektrisch leitfähigen Silberpartikeln 9 elektrisch leitfähig gemacht wurde. In anderen Ausführungsformen kann das Zwischenmaterial 8 ein in verformbarem Zustand vorliegendes metallisches Material sein. Beispielsweise kann das metallische Material eine Folie sein, die durch Druck mit der Schnittfläche in Verbindung gebracht wurde.

Wegen der Durchtrennung der Kohlenstofffasern 3 schräg zur Längsrichtung steht das Zwischenmaterial 8 mit im Vergleich zur Querschnittsfläche großen Endflächen 4 in Verbindung. Trotz des zwischen dem Zwischenmaterial 8 und den Kohlenstofffasern 3 bestehenden Übergangswiderstands reicht die Größe der Endflächen 4 aus, eine ausreichende Leitfähigkeit zwischen Kohlenstofffasern 3 und Zwischenmaterial 8 zu erzielen. Ein Stromfluss vom elektrischen Leiter 5 über das Zwischenmaterial 8 auf die Kohlenstofffasern 3 ist möglich. Auf der anderen Seite des festen Körpers 2 ist ebenfalls ein Stück abgeschnitten oder auf andere Weise eine schräge Endfläche hergestellt, so dass auch die gegenüberliegenden Endflächen der Kohlenstofffasern 3 in einer nicht dargestellten Schnittfläche des festen Körpers liegen. Diese Endflächen sind auf die gleiche Weise mit einem elektrischen Leiter verbunden, so dass zusammen mit der Stromquelle ein geschlossener Stromkreis entsteht. Alle Bestandteile dieses Stromkreises sind so bemessen, dass eine elektrische Beheizung der Kohlenstofffasern 3 und damit des festen Körpers 2 möglich ist. In den Stromkreis kann eine nicht dargestellte Messeinrichtung integriert sein, die Änderungen des Widerstands der Kohlenstofffasern 3 misst. Dies kann z. B. für die Überwachung von Bauteilen auf Brüche und Risse verwendet werden.

## Patentansprüche

1. Anordnung zum Erzeugen eines Stromflusses durch Kohlenstofffasern, mit einer Stromquelle, mit mindestens zwei mit der Stromquelle verbundenen elektrischen Leitern (5) und mit einer Vielzahl von in eine elektrisch isolierende Masse (6) eingebetteten Kohlenstofffasern (3), wobei die Kohlenstofffasern (3) über ihre Endflächen (4) mit den elektrischen Leitern (5) elektrisch leitend verbunden sind, **dadurch gekennzeichnet, dass** die Endflächen (4) größer sind als die Querschnittsflächen der jeweiligen Kohlenstofffasern (3), dass die Kohlenstofffasern (3) mit der elektrisch isolierenden Masse (6) einen festen Körper (2) bilden, dass die Endflächen (4) in einer Schnittfläche (7) des festen Körpers (2) liegen und die Kohlenstofffasern (3) ausschließlich über ihre Endflächen (4) mit den elektrischen Leitern (5) verbunden sind.

2. Anordnung nach Anspruch 1, **dadurch gekennzeichnet, dass** der Flächeninhalt der Endflächen (4) mindestens eineinhalbmal, vorzugsweise mindestens zweimal, weiter vorzugsweise mindestens dreimal so groß ist wie der Flächeninhalt der Querschnittsflächen.

3. Anordnung nach Anspruch 1 oder 2, **dadurch gekennzeichnet, dass** die Endflächen (4) ebene Fläche sind, die mit der Längsrichtung der Kohlenstofffasern (3) einen Winkel von weniger als 45°, vorzugsweise weniger als 30°, weiter vorzugsweise weniger als 15° einschließen.

4. Anordnung nach einem der Ansprüche 1 bis 3, **dadurch gekennzeichnet, dass** die Umfangsflächen (10) der Kohlenstofffasern (3) vollständig mit elektrisch isolierender Masse (6) umgeben sind.

5. Anordnung nach einem der Ansprüche 1 bis 4, **dadurch gekennzeichnet, dass** die Kohlenstofffasern (3) im wesentlichen parallel zueinander ausgerichtet sind.

6. Anordnung nach einem der Ansprüche 1 bis 5, **dadurch gekennzeichnet, dass** die elektrisch isolierende Masse (6) ein Kunstharz ist.

7. Anordnung nach Anspruch 1, **dadurch gekennzeichnet, dass** die Schnittfläche (7) eine ebene Fläche ist, die mit der Längsrichtung der Kohlenstofffasern (3) einen Winkel von weniger als 45°, vorzugsweise weniger als 30°, weiter vorzugsweise weniger als 15° einschließt.

8. Anordnung nach einem der Ansprüche 1 bis 7, **dadurch gekennzeichnet, dass** ein Zwischenmaterial (8) die Verbindung zwischen den Endflächen (4) und den elektrischen Leitern (5) herstellt.

9. Anordnung nach Anspruch 8, **dadurch gekennzeichnet, dass** das Zwischenmaterial (8) ein Kunstharz ist, in das eine Vielzahl von elektrisch leitfähigen Partikeln (9) eingeschlossen sind.

10. Anordnung nach Anspruch 8, **dadurch gekennzeichnet, dass** das Zwischenmaterial (8) ein metallisches Material ist.

11. Anordnung nach Anspruch 10, **dadurch gekennzeichnet, dass** das metallische Material in einem verformbaren Zustand vorliegt.

12. Anordnung nach einem der Ansprüche 1 bis 11, **dadurch gekennzeichnet, dass** sie eine Messeinrichtung umfasst und so ausgebildet ist, dass die Messeinrichtung Änderungen des elektrischen Widerstandes der Kohlenstofffasern (3) misst.

## Claims

1. Arrangement for generating current flow through carbon fibres, having a current source, having at least two electrical conductors (5) which are connected to the current source, and having a large number of carbon fibres (3) which are embedded in an electrically insulating compound (6), with the carbon fibres (3) being electrically conductively connected to the electrical conductors (5) by means of their end faces (4), **characterized in that** the end faces (4) are larger than the cross-sectional faces of the respective carbon fibres (3), **in that** the carbon fibres (3) form a solid body (2) with the electrically insulating compound (6), **in that** the end faces (4) lie in a sectional face (7) of the solid body (2), and the carbon fibres (3) are connected to the electrical conductors (5) solely by means of their end faces (4).

2. Arrangement according to Claim 1, **characterized in that** the surface area of the end faces (4) is at least one and a half times, preferably at least twice, and further preferably at least three times, as large as the surface area of the cross-sectional faces.

3. Arrangement according to Claim 1 or 2, **characterized in that** the end faces (4) are planar faces which form an angle of less than 45°, preferably less than 30°, further preferably less than 15°, with the longitudinal direction of the carbon fibres (3).

4. Arrangement according to one of Claims 1 to 3, **characterized in that** the circumferential faces (10) of the carbon fibres (3) are completely surrounded by electrically insulating compound (6).

5. Arrangement according to one of Claims 1 to 4, **characterized in that** the carbon fibres (3) are oriented substantially parallel to one another.

6. Arrangement according to one of Claims 1 to 5, **characterized in that** the electrically insulating compound (6) is a synthetic resin.

7. Arrangement according to Claim 1, **characterized in that** the sectional face (7) is a planar face which forms an angle of less than 45°, preferably less than 30°, and further preferably less than 15°, with the longitudinal direction of the carbon fibres (3).

8. Arrangement according to one of Claims 1 to 7, **characterized in that** an intermediate material (8) establishes the connection between the end faces (4) and the electrical conductors (5).

9. Arrangement according to Claim 8, **characterized in that** the intermediate material (8) is a synthetic resin in which a large number of electrically conductive particles (9) are incorporated.

10. Arrangement according to Claim 8, **characterized in that** the intermediate material (8) is a metal material.

11. Arrangement according to Claim 10, **characterized in that** the metal material is in a deformable state.

12. Arrangement according to one of Claims 1 to 11, **characterized in that** it comprises a measuring device and is designed such that the measuring device measures changes in the electrical resistance of the carbon fibres (3).

## Revendications

1. Agencement destiné à produire un flux de courant à travers des fibres de carbone, avec une source de courant, avec au moins deux conducteurs électriques (5) reliés à la source de courant, et avec une pluralité de fibres de carbone (3) enrobées dans une pâte électro-isolante (6), les fibres de carbone (3) étant reliées sous forme électroconductrice par leurs surfaces terminales (4) avec les conducteurs électriques (5), **caractérisé en ce que** les surfaces terminales (4) sont plus grandes que les surfaces transversales des fibres de carbone (3) respectives, **en ce que** les fibres de carbone (3) forment avec la pâte électro-isolante (6) un corps solide (2), **en ce que** les surfaces terminales (4) sont situées dans un plan de section (7) du corps solide (2) et les fibres de carbone (3) sont reliées aux conducteurs électriques (5) exclusivement par leurs surfaces terminales (4).

2. Agencement selon la revendication 1, **caractérisé en ce que** la superficie des surfaces terminales (4) est au moins une fois et demie, de préférence au moins deux fois, encore mieux au moins trois fois supérieure à la superficie des surfaces transversales.

3. Agencement selon la revendication 1 ou 2, **caractérisé en ce que** les surfaces terminales (4) sont des surfaces planes, qui forment avec la direction longitudinale des fibres de carbone (3) un angle inférieur à 45°, de préférence inférieur à 30°, encore mieux inférieur à 15°.

4. Agencement selon l'une quelconque des revendications 1 à 3, **caractérisé en ce que** les surfaces périphériques (10) des fibres de carbone (3) sont entièrement entourées par la pâte électro-isolante (6).

5. Agencement selon l'une quelconque des revendications 1 à 4, **caractérisé en ce que** les fibres de carbone (3) sont orientées sensiblement parallèlement entre elles.

6. Agencement selon l'une quelconque des revendications 1 à 5, **caractérisé en ce que** la pâte électro-isolante (6) est une résine synthétique.

7. Agencement selon la revendication 1, **caractérisé en ce que** le plan de section (7) est une surface plane, qui forme avec la direction longitudinale des fibres de carbone (3) un angle inférieur à 45°, de préférence inférieur à 30°, encore mieux inférieur à 15°.

8. Agencement selon l'une quelconque des revendications 1 à 7, **caractérisé en ce qu'**un matériau intermédiaire (8) établit la liaison entre les surfaces terminales (4) et les conducteurs électriques (5).

9. Agencement selon la revendication 8, **caractérisé en ce que** le matériau intermédiaire (8) est une résine synthétique, dans laquelle sont incluses une pluralité de particules électroconductrices (9).

10. Agencement selon la revendication 8, **caractérisé en ce que** le matériau intermédiaire (8) est un matériau métallique.

11. Agencement selon la revendication 10, **caractérisé en ce que** le matériau métallique est disponible à l'état formable.

12. Agencement selon l'une quelconque des revendications 1 à 11, **caractérisé en ce qu'**il comporte un dispositif de mesure et est configuré de telle sorte que le dispositif de mesure mesure des variations de la résistance électrique des fibres de carbone (3).
